# EUROPEAN PATENT APPLICATION

(11) **EP 4 737 251 A1**
(43) Date of publication of application: **06.05.2026**
(21) Application number: 24209624.6
(22) Date of filing: 29.10.2024
(51) Int. Cl.: B60W 50/14, B60W 30/09

(54) **METHOD AND SYSTEM FOR PROTECTING A WHEEL OF A VEHICLE FROM BEING DAMAGED BY A ROADWAY BOUNDARY, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: NILSSON, Jan, 40531 Göteborg (SE)
(74) Representative: Kransell & Wennborg KB

(57) **Abstract**

The disclosure relates to a method for protecting a wheel (12, 14) of a vehicle from being damaged by a roadway boundary (20). The method comprises obtaining first data (D1) indicative of the roadway boundary (20). The method further comprises obtaining second data (D2) indicative of a likelihood of a collision between the roadway boundary (20) and the wheel (12, 14) based on the first data (D1). Moreover, the method comprises causing a notification (N) for a user of the vehicle (10) if the likelihood exceeds a predefined first likelihood threshold. The notification (N) is indicative of at least one of a specific wheel (12, 14) of the vehicle (10) risking collision with the roadway boundary (20), a distance (D) between the specific wheel (12, 14) of the vehicle (10) and the roadway boundary (20), and a difference between the likelihood of a collision and the predefined first likelihood threshold. The disclosure is also directed to a data processing apparatus (58), to a computer program (66) and to a computer-readable storage medium (64). Finally, the disclosure is directed to a system (36) for protecting a wheel (12, 14) of a vehicle (10) from being damaged by a roadway boundary (20).

## Description

### TECHNICAL FIELD

The present disclosure relates to a method for protecting a wheel of a vehicle from being damaged by a roadway boundary.

Moreover, the present disclosure relates to a data processing apparatus, to a computer program and to a computer-readable storage medium for carrying out said method.

Furthermore, the present disclosure is directed to a system for protecting a wheel of a vehicle from being damaged by a roadway boundary.

### BACKGROUND ART

When a vehicle hits a roadway boundary, for example a curbstone, with one of its wheels, the wheel may get damaged. This may involve damage to the tire and/or damage to the rim.

A damaged tire may be at risk to deflate while driving.

A rim of a wheel is often a design feature of a vehicle. Thus, when damaged, the rim may comprise optically unpleasant scratches or dents.

### SUMMARY

Hence, there may be a need for protecting a wheel of a vehicle from being damaged by a roadway boundary.

The problem is at least partially solved or alleviated by the subject matter of the independent claims of the present disclosure, wherein further examples are incorporated in the dependent claims.

According to a first aspect, there is provided a method for protecting a wheel of a vehicle from being damaged by a roadway boundary. The method comprises:
- obtaining first data indicative of the roadway boundary in the vicinity of the vehicle,
- obtaining second data indicative of a likelihood of a collision between the roadway boundary and the wheel based on the first data, and
- causing a notification for a user of the vehicle if the likelihood exceeds a predefined first likelihood threshold,
wherein the notification is indicative of at least one of a specific wheel of the vehicle risking collision with the roadway boundary, a distance between the specific wheel of the vehicle risking collision with the roadway boundary and the roadway boundary, and a difference between the likelihood of a collision between the roadway boundary and the wheel and the predefined first likelihood threshold.

The wheel of the vehicle may comprise a tire, particularly an inflatable tire, and a rim carrying the tire. The roadway boundary by which the wheel may be damaged may be a curbstone, a crash barrier, and/or an edge, particularly a sharp edge, of a drivable surface of the roadway on which the vehicle is travelling. Obtaining the first data is to be understood as receiving or determining the first data indicative of the roadway boundary that is in the vicinity of the vehicle. The vicinity of the vehicle may be understood as a zone lying within a predefined proximal radius around the vehicle. Additionally or alternatively, the vicinity of the vehicle may be understood as a zone within a predefined distance in a driving direction of the vehicle and/or within a predefined lateral distance. Thus, the roadway boundary being in the vicinity of the vehicle may mean that the roadway boundary is within the predefined proximal radius around the vehicle and/or within the predefined distance in a driving direction and/or the lateral distance of the vehicle. Obtaining the second data is to be understood as receiving or determining the second data indicative of a likelihood of a collision between the roadway boundary and the wheel based on the first data. This means that the first data is taken into account when obtaining the second data indicative of said likelihood. In other words, the second data is a function of the first data. It is emphasized that this does not necessarily mean that the second data is an exclusive function of the first data. The notification for a user of the vehicle may be understood as a warning to a user, particularly to a driver, of the vehicle. The notification is provided to the user of the vehicle if the likelihood of a collision between the roadway boundary and the wheel of the vehicle exceeds a predefined first likelihood threshold. In other words, if the second data indicative of said likelihood indicates that said likelihood is higher than the predefined first likelihood threshold, the notification is provided to the user of the vehicle. In simplified words, the notification is caused if the likelihood of a collision between the roadway boundary and the wheel is found to be sufficiently high. If the notification is indicative of the specific wheel of the vehicle risking collision with the roadway boundary, the notification conveys information to the user which wheel of a plurality of wheels of the vehicle is at risk of colliding with the roadway boundary. If the notification is indicative of the distance between the specific wheel of the vehicle being at risk of colliding with the roadway boundary and the roadway boundary, the user is provided with an indication on how far the wheel of the vehicle that is at risk of colliding with the roadway boundary is located away from said roadway boundary. In other words, the notification for the user may comprise an information on an imminence of a collision between the specific wheel of the vehicle and the roadway boundary. The difference between the likelihood of a collision between the roadway boundary and the wheel and the predefined first likelihood threshold is to be understood as an amount to which the obtained likelihood of a collision between the roadway boundary and the wheel exceeds the predefined first likelihood threshold. Thus, the user may be provided with an indication of a certainty of a collision between the roadway boundary and the wheel of the vehicle that is at risk of colliding with the roadway boundary. All in all, the method has the effect that the user of the vehicle may be notified prior to a collision between the wheel of the vehicle and the roadway boundary. This notification enables the user of the vehicle to take action to avoid a collision between the roadway boundary and the wheel. A user action may comprise reducing a traveling speed of the vehicle, even up to a standstill, and/or modifying a driving direction of the vehicle. The latter alternative may comprise steering the vehicle or changing from a forward driving direction into a rearward driving direction or vice versa. It is understood that if the likelihood of a collision between the roadway boundary and the wheel of the vehicle does not exceed the predefined first likelihood threshold, the method is abandoned. This has the effect that the user of the vehicle does not get distracted by a notification generated by the method if there is no substantial risk of a collision between the roadway boundary and the wheel of the vehicle.

In an example, the notification comprises at least one of an acoustic notification, an optical notification, and a haptic notification. The acoustic notification may comprise a notification that is played to the user of the vehicle via at least one speaker. An acoustic notification comes with the advantage that the user of the vehicle does not need to concentrate on a specific element within the interior of the vehicle in order to notice the notification. In other words, an acoustic notification involves a high likelihood that the user of the vehicle will actually take note of the notification even though the user of the vehicle may concentrate on performing a specific driving action, e.g. maneuvering the vehicle into a parking spot. The optical notification is understood as a notification that may be visually perceived by the user. The optical notification may comprise a light signal and/or a notification displayable on a screen of the vehicle. The latter alternative may particularly comprise a representation of the wheel that is at risk of colliding with the roadway boundary and the roadway boundary. An optical notification comes with the advantage that it is independent from any traffic noise that may be created in the surroundings of the vehicle. Moreover, an optical notification may convey information of comparatively high resolution, in particular more information that can be conveyed to the user per time unit or at a glance, when using other types of notification. Furthermore, particularly at night, an optical notification, particularly a lit light bar or a screen, is an efficient way of providing the notification to the user. Thus, even though the vehicle may be situated in a busy traffic environment, the user of the vehicle may still be able to take note of the optical notification. The optical notification comprising a notification displayable on the screen of the vehicle and further comprising a representation of the wheel and the roadway boundary may enable the user of the vehicle to estimate the distance between the wheel of the vehicle and the roadway boundary. The user may thereupon adapt his or her user action based on the estimated distance between the wheel of the vehicle and the roadway boundary. A haptic notification may comprise an activation of at least one vibratable element in the interior of the vehicle. For example, the vibratable element may comprise a vibratable steering wheel. If the likelihood of a collision between the roadway boundary and the wheel of the vehicle exceeds the predefined first likelihood threshold, the vibratable steering wheel may start to vibrate. In another example, the vibratable element may comprise a plurality of vibratable elements incorporated into a seat cushion of the seat of the user of the vehicle. The vibratable elements incorporated into the seat cushion of the seat of the user of the vehicle may be arranged at a distance from each other. If the likelihood of a collision between the roadway boundary in the wheel of the vehicle exceeds the predefined first likelihood threshold, that vibratable element incorporated into the seat cushion of the seat of the vehicle that is closest to the wheel of the vehicle that is at risk of colliding with the roadway boundary may start to vibrate. Thus, it may be indicated to the user of the vehicle which wheel of the vehicle is at risk of colliding with the roadway boundary. Like the acoustic notification, the user of the vehicle does not need to concentrate on a specific element in the interior of the vehicle to take note of the haptic notification. Additionally, the haptic notification may be taken note of independent from traffic noise from a busy traffic environment that the vehicle may be situated in.

In an example, the notification comprises the acoustic notification and the acoustic notification comprises an onomatopoeic representation of a collision between the wheel and the roadway boundary. An onomatopoeic representation of a collision between the wheel and the roadway boundary may be understood as an acoustic representation of the actual sound that occurs when a wheel of the vehicle collides with the roadway boundary. Additionally or alternatively, the onomatopoeic representation may be understood as an acoustic representation that sounds similar to the actual sound that occurs when a wheel of the vehicle collides with the roadway boundary. Further additionally or alternatively, the onomatopoeic representation may be understood as an acoustic representation that is suggestive of the wheel of the vehicle colliding with the roadway boundary Thus, the user of the vehicle may be provided with, in an acoustic sense, an illustrative warning of the collision that is likely to occur between the wheel of the vehicle and the roadway boundary.

In an example, the onomatopoeic representation of the collision comprises at least one of a recorded real-world sound, a simulated sound recreating or imitating a real-world sound, and an artificial sound. The alternative of the recorded real-world sound may be understood as a recording of an actual collision that has occurred between a wheel and the roadway boundary. The recording does not necessarily have to originate from a wheel of specifically that vehicle that is subject to the method according to the present first aspect. Instead, the recording of the real-world sound may originate from any wheel of any vehicle colliding with any roadway boundary. In an example, the recorded real-world sound that constitutes the acoustic notification to the user of the vehicle may comprise a real-world sound originating from a wheel of the vehicle colliding with the same type of roadway boundary that the wheel of the vehicle subject to the method is at risk of colliding with. The onomatopoeic representation of the collision comprising a recorded real-world sound has the effect that the user of the vehicle is provided with a realistic acoustic impression of what the imminent collision between the wheel and the roadway boundary will sound like. Due to this, the user of the vehicle may instantly know what the acoustic notification is trying to warn the user of. The simulated sound recreating or imitating a real-world sound is to be understood as a synthetically created sound that sounds like or at least similar to the above-described real-world sound. However, the simulated sound does not originate from a real-world collision between a wheel and a roadway boundary. Instead, the simulated sound may fully have been created by computational means. Thus, the user of the vehicle may still instantly know what the acoustic notification is trying to warn the user of. Additionally, the simulated sound may be easier to generate than a recorded real-world sound. In particular, the simulated sound does not require a real-world wheel of a vehicle to get damaged from a collision with a roadway boundary. The artificial sound is independent from any real-world sound. This means that the artificial sound does not recreate or imitate a real-world sound of a wheel colliding with a roadway boundary. Still, the artificial sound may be suggestive of the wheel of the vehicle colliding with the roadway boundary. Such a suggestive perception of the user may be created by a high-pitched tone or by an impact noise indicating a collision. The artificial sound may be a sound that is well recognizable for the user of the vehicle even though the user of the vehicle might be distracted from traffic noise that originates from a busy traffic environment that vehicle is situated in.

In an example, the onomatopoeic representation comprises at least one of a noise of a rolling tire, a noise of a squeaking tire and a noise of metal scratching. The noise of a rolling tire is understood as the noise that a tire makes when rolling on a drivable surface, in particular on an asphalted drivable surface of a roadway. It is understood that such noise may comprise a reproduction of a recording of a noise that the tire actually makes during a specific driving situation in which the wheel of the vehicle is at risk of colliding with a roadway boundary. In this case, the noise of the rolling tire may be amplified when played to the user as an acoustic notification. Additionally or alternatively, the noise of the rolling tire may correspond to the noise that a tire of the vehicle makes when the vehicle is traveling at a substantially higher speed than in the actual driving situation in which the wheel of the vehicle is at risk of colliding with a roadway boundary. The speed of the vehicle in the actual driving situation in which there is a significant risk of a wheel of the vehicle colliding with a roadway boundary may be comparatively low. Thus, the noise that the rolling tire makes in this particular driving situation may be rather quiet. An amplification of the noise of the rolling tire or the noise that a rolling tire makes at a substantially higher speed ensures that the user of the vehicle is provided with a well-audible acoustic notification. The noise of a rolling tire may itself be used as the acoustic notification. However, it is also conceivable that the noise of a rolling tire is played to the user during a driving maneuver, e.g. while parking, and the noise of a rolling tire is interrupted and/or terminated once the likelihood of a collision exceeds the predefined first likelihood threshold. The noise of a squeaking tire may reproduce the noise that a tire of the wheel of the vehicle makes when interacting with the roadway boundary, particularly when interacting with an edge and/or a lateral surface of a curbstone in a rolling movement. This way, the user of the vehicle may be efficiently and intuitively warned of potential damage that may be caused to the tire due to a potential collision with the roadway boundary. Likewise, the noise of metal scratching may reproduce the noise that a rim of the wheel of the vehicle makes when interacting with the roadway boundary, particularly when interacting with an edge and/or a lateral surface of a curbstone in a rolling movement. This way, the user of the vehicle may be efficiently and intuitively warned of potential damage that may be caused to the rim due to a potential collision with the roadway boundary.

In an example, the notification comprises the acoustic notification. The acoustic notification comprises a spatial audio signal having a virtual or effective origin associated with the specific wheel of the vehicle risking collision with the roadway boundary. A spatial audio signal is understood as an audio signal conveying an information on an origin of the audio signal. This may be realized using a stereo audio signal. In other words, a spatial audio signal may be generated using at least two audio channels, each channel addressing one of at least two speakers that are arranged at a distance from each other in the interior of the vehicle. A spatial audio signal may also be generated using more than two, e.g. three and in particular four audio channels. In an example, a plethora of audio channels each addressing one of a plethora of speakers may provide the spatial audio signal. In particular, speakers arranged in a headrest of a seat occupied by the user such that the speakers are arranged close to a head of the user may provide audio signals from a rear without annoying passengers on a rear bench. In the particular case of four audio channels, there are at least four speakers arranged at a distance from each other in the interior of the vehicle that may provide the acoustic notification to the user. In an example, each of the four speakers is arranged in one respective corner of the passenger cabin of the vehicle when taking a bird's eye view of the vehicle. In other words, each of the four speakers may be arranged in the interior of the vehicle at a position that is close to one particular wheel of the vehicle. The spatial audio signal having a virtual or effective origin associated with the specific wheel of the vehicle risking collision with the roadway boundary means that the acoustic notification reaches the user of the vehicle exclusively or at least predominantly from a direction that corresponds to a direction of the specific wheel from the user's point of view. This has the effect that the user may instantly and intuitively become aware of which wheel of the vehicle is at risk of colliding with the roadway boundary.

In an example, the notification comprises the acoustic notification. The distance between the specific wheel of the vehicle risking collision with the roadway boundary and the roadway boundary is indicated by an intensity and/or a repetition rate of at least one element of the acoustic notification. The acoustic notification may comprise one or more elements. The intensity of at least one element of the acoustic notification may also be understood as a volume of the at least one element of the acoustic notification. In an example, the shorter the distance between the specific wheel of the vehicle risking collision with the roadway boundary and the roadway boundary, the higher the intensity, i.e. the louder the at least one element of the acoustic notification. The repetition rate of the at least one element of the acoustic notification is to be understood as a number of times that the at least one element of the acoustic notification is repeated per time unit. In an example, a high petition rate of the at least one element of the acoustic notification may indicate a short distance between the specific wheel of the vehicle risking collision with the roadway boundary and the roadway boundary. The distance between the specific wheel of the vehicle risking collision with the roadway boundary and the roadway boundary being indicated by the intensity and/or by the repetition rate of at least one element of the acoustic notification provides the user of the vehicle with an indication on how far the vehicle may still advance towards the roadway boundary without colliding with the roadway boundary. Thus, the user of the vehicle is provided with a distance-based indication if a current driving maneuver may be continued or if the current driving maneuver should be adapted or even aborted.

In an example, the notification comprises the acoustic notification. The difference between the likelihood of a collision between the roadway boundary and the wheel and the predefined first likelihood threshold is indicated by an intensity and/or a repetition rate of the at least one element of the acoustic notification. The intensity and/or the repetition rate of the at least one element of the acoustic notification are to be understood in the same way as explained in the previous paragraph relating to a distance between the specific wheel of the vehicle risking collision with the roadway boundary and the roadway boundary being indicated by an intensity and/or a repetition rate of at least one element of the acoustic notification. The difference between the likelihood of collision and the predefined first likelihood threshold being indicated by the intensity and/or the repetition rate of the at least one element of the acoustic notification provides the user of the vehicle with an indication on how likely a collision between the wheel of the vehicle and the roadway boundary is in a given driving situation. Thus, the user of the vehicle is made aware if a current driving maneuver may be continued or if the current driving maneuver should be adapted or even aborted based on the likelihood of collision.

In an example, the method further comprises causing a collision mitigation maneuver if the likelihood exceeds a predefined second likelihood threshold. It is understood that the predefined second likelihood threshold is of a higher value than the predefined first likelihood threshold. This means that the predefined second likelihood threshold is associated with a higher risk of collision than the predefined first likelihood. In other words, a user of the vehicle is first provided with the notification indicative of a wheel of the vehicle risking collision with the roadway boundary. After that and if the likelihood of a collision between the roadway boundary and the wheel of the vehicle increases even further, the collision mitigation maneuver may be caused. Thus, the collision mitigation maneuver serves as a "last resort" if the user of the vehicle does not show any or at least a non-sufficient reaction in the sense of adapting and/or aborting a current driving maneuver even though the user of the vehicle has been provided with a notification of the likelihood of a collision between the roadway boundary and the wheel of the vehicle. The collision mitigation maneuver may comprise a steering action, a braking action to reduce the speed of the vehicle or even up to a standstill of the vehicle and/or a reversal of the driving direction of the vehicle. The collision mitigation maneuver serves the purpose of avoiding a collision between the wheel of the vehicle and the roadway boundary by adapting a state of movement and/or a state of acceleration of the vehicle.

In an example, the first data comprises Lidar data. Lidar stands for Light Detection and Ranging. Lidar data comprises reflection data of laser light that has been emitted to an environment of the vehicle. The lidar data may be point cloud data. Within the context of the present disclosure, the roadway boundary is understood as a part of the environment of the vehicle. Lidar data has shown to provide an accurate indication of a specific wheel of the vehicle risking collision with the roadway boundary. Moreover, lidar data has shown to provide an accurate distance measurement between the specific wheel of the vehicle risking collision with the roadway boundary and the roadway boundary. Furthermore, it has been observed that the second data indicative of the likelihood of a collision between the roadway boundary and the wheel of the vehicle can be obtained based on lidar data with high accuracy and precision. This makes the notification that is provided to the user of the vehicle particularly reliable. This may mean that the notification of an imminent collision between the wheel of the vehicle and the roadway boundary is not caused if there is in fact no risk of a collision. It may also mean that the notification does not fail to be caused if there is in fact a considerable risk of a collision between the wheel of the vehicle and the roadway boundary. A reliable notification of a collision between the wheel of the vehicle and the roadway boundary provided to the user of the vehicle ensures trust of the user of the vehicle in the notification.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the first aspect. Providing such a data processing apparatus allows notifying the user of the vehicle prior to a collision between the wheel of the vehicle and the roadway boundary. This may enable the user of the vehicle to take action to avoid the collision between the roadway boundary and the wheel. A user action may comprise reducing a traveling speed of the vehicle, even up to a standstill, and/or modifying a driving direction of the vehicle. The latter alternative may comprise steering the vehicle or changing from a forward driving direction into a rearward driving direction. It is understood that if the likelihood of a collision between the roadway boundary and the wheel of the vehicle does not exceed the predefined first likelihood threshold, the data processing apparatus causes no notification being provided to the user of the vehicle. This has the effect that the user of the vehicle does not get distracted by a notification caused by the data processing apparatus if there is no substantial risk of a collision between the roadway boundary and the wheel of the vehicle.

According to a third aspect, there is provided a computer program comprising instructions which, when the computer program is executed by a computer, cause the computer to carry out the method of the first aspect. Providing such a computer program allows notifying the user of the vehicle prior to a collision between the wheel of the vehicle and the roadway boundary. This may enable the user of the vehicle to take action to avoid the collision between the roadway boundary and the wheel. A user action may comprise reducing a traveling speed of the vehicle, even up to a standstill, and/or modifying a driving direction of the vehicle. The latter alternative may comprise steering the vehicle or changing from a forward driving direction into a rearward driving direction. It is understood that if the likelihood of a collision between the roadway boundary and the wheel of the vehicle does not exceed the predefined first likelihood threshold, the computer program causes no notification being provided to the user of the vehicle. This has the effect that the user of the vehicle does not get distracted by a notification caused by the computer program if there is no substantial risk of a collision between the roadway boundary and the wheel of the vehicle.

According to a fourth aspect, there is provided a computer-readable storage medium comprising instructions which, when executed by a computer, cause the computer to carry out the method of the first aspect. Providing such a computer-readable storage medium allows notifying the user of the vehicle prior to a collision between the wheel of the vehicle and the roadway boundary. This may enable the user of the vehicle to take action to avoid the collision between the roadway boundary and the wheel. A user action may comprise reducing a traveling speed of the vehicle, even up to a standstill, and/or modifying a driving direction of the vehicle. The latter alternative may comprise steering the vehicle or changing from a forward driving direction into a rearward driving direction. It is understood that if the likelihood of a collision between the roadway boundary and the wheel of the vehicle does not exceed the predefined first likelihood threshold, the computer-readable storage medium causes no notification being provided to the user of the vehicle. This has the effect that the user of the vehicle does not get distracted by a notification caused by the computer-readable storage medium if there is no substantial risk of a collision between the roadway boundary and the wheel of the vehicle.

According to a fifth aspect, there is provided a system for protecting a wheel of a vehicle from being damaged by a roadway boundary. The system comprises:
- a sensor unit configured for providing first data indicative of the roadway boundary in the vicinity of the vehicle,
- a data processing apparatus according to the second aspect, and
- a notification interface,
wherein the sensor unit and the notification interface are communicatively connected to the data processing apparatus.

Providing such a system allows notifying the user of the vehicle prior to a collision between the wheel of the vehicle and the roadway boundary. This may enable the user of the vehicle to take action to avoid the collision between the roadway boundary and the wheel. A user action may comprise reducing a traveling speed of the vehicle, even up to a standstill, and/or modifying a driving direction of the vehicle. The latter alternative may comprise steering the vehicle or changing from a forward driving direction into a rearward driving direction. It is understood that if the likelihood of a collision between the roadway boundary and the wheel of the vehicle does not exceed the predefined first likelihood threshold, system causes no notification being provided to the user of the vehicle. This has the effect that the user of the vehicle does not get distracted by a notification caused by the system if there is no substantial risk of a collision between the roadway boundary and the wheel of the vehicle.

In an example, the sensor unit is located in a side mirror of the vehicle. Additionally or alternatively, the sensor unit may be located in a rearview camera mount if the vehicle is equipped with a camera monitoring system such as a digital mirror replacement system. The side mirror and/or the rearview camera mount of the vehicle is an exposed component with respect to the outer hull of the vehicle. Placing the sensor unit in the side mirror and/or in the rearview camera mount of the vehicle ensures that the sensor unit may capture the roadway boundary that the wheel of the vehicle is at risk of colliding with in a reliable manner. In particular, no other part of the outer hull of the vehicle may obstruct the sensor unit from providing first data indicative of the roadway boundary in the vicinity of the vehicle. It is understood that the sensor unit may comprise more than one sensing element. In this case, sensing elements of the sensor unit may be located in both side mirrors and/or both rearview camera mounts of the vehicle. This way, a notification for the user may be caused regardless of the roadway boundary in the vicinity of the vehicle being on the right side or on the left side of the vehicle.

In an example, the sensor unit comprises a lidar unit. Lidar stands for Light Detection and Ranging. The lidar unit provides lidar data as first data. Lidar data comprises reflection data of laser light that has been emitted to an environment of the vehicle. Within the context of the present disclosure, the roadway boundary is understood as a part of the environment of the vehicle. Lidar data has shown to provide an accurate indication of a specific wheel of the vehicle risking collision with the roadway boundary. Moreover, lidar data has shown to provide an accurate distance measurement between the specific wheel of the vehicle risking collision with the roadway boundary and the roadway boundary. Furthermore, it has been observed that the second data indicative of the likelihood of a collision between the roadway boundary in the wheel of the vehicle can be obtained from lidar data with high accuracy and precision. This makes the notification that is provided to the user of the vehicle by the system particularly reliable. This may mean that the notification of an imminent collision between the wheel of the vehicle and the roadway boundary is not caused if there is in fact no risk of a collision. It may also mean that the notification does not fail to be caused if there is in fact a considerable risk of a collision between the wheel of the vehicle and the roadway boundary. A reliable notification of a collision between the wheel of the vehicle and the roadway boundary provided to the user of the vehicle ensures trust of the user of the vehicle in the system.

It should be noted that the above examples may be combined with each other irrespective of the aspect involved. This means that features, effects and advantages that have been mentioned in connection with one out of the method according to the present disclosure, the data processing apparatus according to the present disclosure, the computer program according to the present disclosure and the system according to the present disclosure, also apply to any other one out of the method according to the present disclosure, the data processing apparatus according to the present disclosure, the computer program according to the present disclosure and the system according to the present disclosure.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a system according to the present disclosure for protecting a wheel of a vehicle from being damaged by a roadway boundary,
- Figure 2: shows a graphical representation of an acoustic signal used as a notification for a user of the vehicle of Figure 1,
- Figure 3: shows the vehicle and the driving situation of Figure 1 in a bird's eye view, and
- Figure 4: shows steps of a method according to the present disclosure for protecting a wheel of a vehicle from being damaged by a roadway boundary.

### DETAILED DESCRIPTION

The Figures are merely schematic representations and serve only to illustrate examples of the disclosure. Identical or equivalent elements are in principle provided with the same reference signs.

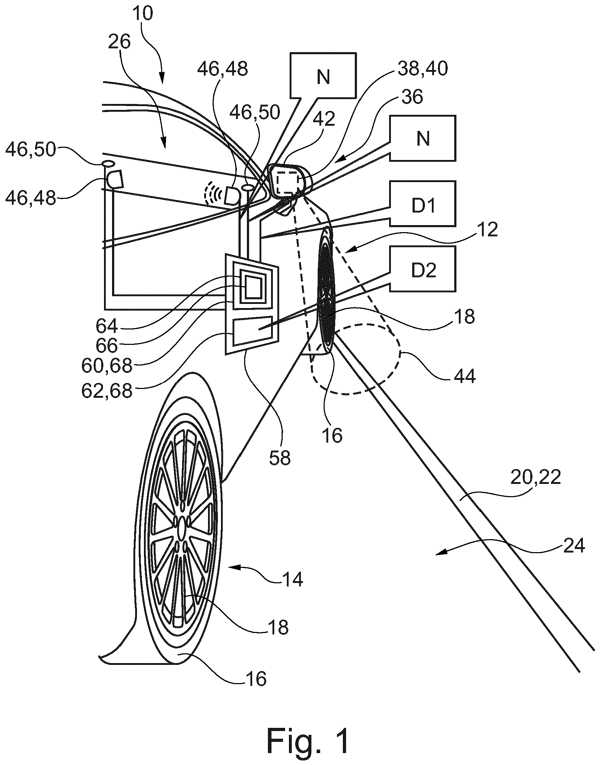

Figure 1 shows a vehicle 10.

The vehicle 10 comprises two front wheels 12 and two rear wheels 14, whereof only one front wheel 12 and one rear wheel 14 is shown in Figure 1.

It is understood that the vehicle 10 comprising four wheels 12, 14 only serves as an example for explanation purposes. The same following explanations are also applicable to other vehicles 10 of different numbers of wheels 12, 14, e.g. minimobility vehicles 10 having three wheels 12, 14.

Each wheel 12, 14, i.e. each front wheel 12 and each rear wheel 14, comprises a tire 16 and a rim 18 holding the tire 16.

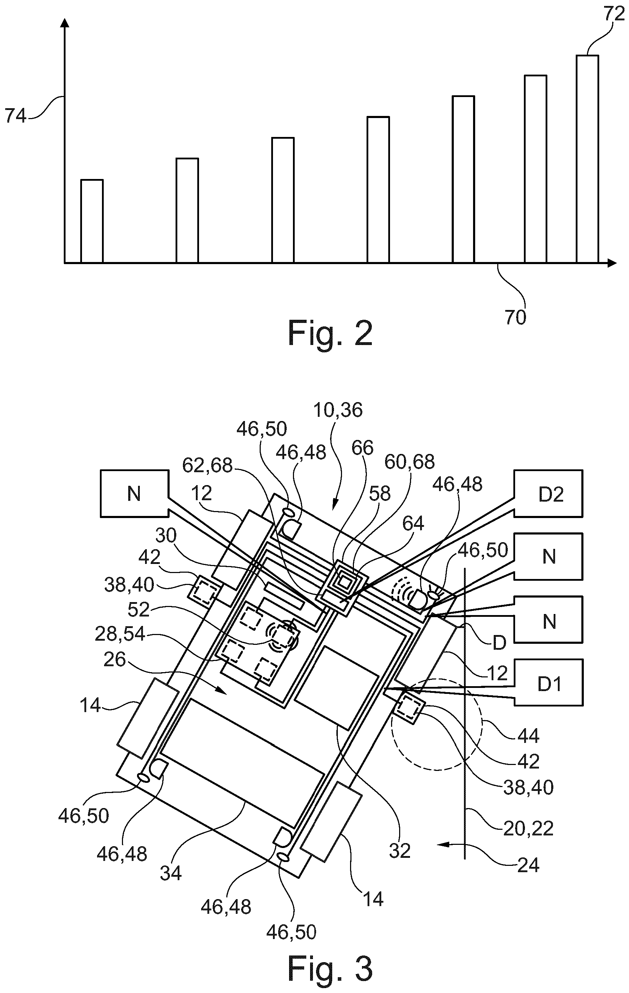

In the present example of Figure 1, a roadway boundary 20 is located in the vicinity of the right front wheel 12 of the vehicle 10. In fact, the vehicle 10 is approaching the roadway boundary 20 such that a distance D (see also Figure 3) between the right front wheel 12 and the roadway boundary 20 is being reduced.

In the present example, the roadway boundary 20 is a curbstone 22 that is elevated with respect to a drivable surface of the roadway 24 on which the vehicle 10 is traveling.

As installations in an interior 26 of a passenger cabin of the vehicle 10, the vehicle comprises a driver's seat 28, a steering wheel 30, a front passenger seat 32 and a rear bench 34 (see Figure 3).

The vehicle 10 further comprises a system 36 for protecting a wheel 12, 14 of the vehicle 10 from being damaged by a roadway boundary 20.

The system 36 comprises a sensor unit 38 configured for providing first data D1 indicative of the roadway boundary 20 in the vicinity of the vehicle 10.

In the present example, the sensor unit 38 comprises a first lidar unit 40 integrated into the right side mirror 42 of the vehicle 10. It is understood that the vehicle 10 comprises an identical second lidar unit 40 integrated into its left side mirror 42. However, the second lidar unit 42 on the left side of the vehicle 10 is not shown in Figure 1.

The sensor unit 38 is arranged in the side mirror 42 of the vehicle 10 such that a field of view 44, in other words a field of perception 44, of the sensor unit 38 is oriented downwards into a direction of the drivable surface of the roadway 24 on which the vehicle 10 is traveling. Since the roadway boundary 20 is naturally located adjacent to the drivable surface of the roadway 24 on which the vehicle 10 is traveling, the field of view 44 and/or the field of perception 44 of the sensor unit 38 is also oriented downwards into a direction of the roadway boundary 20.

The system 36 further comprises a notification interface 46 for notifying a user of the vehicle 10.

In the present example, the notification interface 46 comprises four speakers 48. One of the four speakers 48 is arranged in each of the four corners of an interior 26 of the passenger cabin of the vehicle 10 for providing an acoustic notification N to the user of the vehicle 10. In Figure 1, only two of the four speakers 48 are shown. The entirety of all four speakers 48 is shown in Figure 3.

It is understood that particularly the speakers 48 arranged in the rear corners of the interior 26 of the passenger cabin of the vehicle 10 may be complemented or even replaced by headrest speakers 48 arranged closely to a head of the user without annoying occupants on the rear bench 34 by audio signals provided by said speakers 48.

In the present example, the notification interface 46 also comprises four lamps 50. One of the four lamps is arranged in each of the four corners of the interior 26 of the passenger cabin of the vehicle 10 for providing an optical notification N to the user of the vehicle 10. In Figure 1, only two of the four lamps 50 are shown. The entirety of all four lamps 50 is shown in Figure 3.

It is understood that the four lamps 50 may particularly be arranged adjacent to a left and right window of the vehicle 10. These lamps 50 may be in the form of light bars that are capable of being animated. The animation may be oriented into a direction of the wheel 12, 14 that is at risk of colliding with the roadway boundary 20.

Still in the present example, the notification interface 46 further comprises four vibratable elements 52. One of the four vibratable elements 52 is integrated into each of the four corners of a seat cushion 54 of a driver's seat 28 of the vehicle 10. The vibratable elements 52 are configured for providing a haptic notification N to the user of the vehicle 10. The vibratable elements 52 are only shown in Figure 3.

In an alternative, the two rear vibratable elements 52 may not be integrated into the seat cushion 54 but into a backrest of the driver's seat 28 of the vehicle 10. In particular, the two rear vibratable elements 52 may be integrated into a portion that is in contact with an upper back of the user if the user is occupying the driver's seat 28 of the vehicle 10. The front vibratable elements 52 may still be integrated at or near a front edge of the seat cushion 54 of the driver's seat 28 of the vehicle 10. The front edge of the seat cushion 54 of the driver's seat 28 is near the user's knees if the user occupies the driver's seat 28. This creates a higher spatial difference for the user, which facilitates an efficient and well-interpretable haptic notification N for the user.

The system 36 comprising different types of notification interfaces 46 may be called a multimodal system 36. A multimodal system 36 comes with the advantage that it may provide adequate and recognizable notifications N to the user regardless of environmental circumstances, e.g. a bright day, which may impede a visibility of an optical notification N, or a busy traffic environment, which may impede perception of an audio notification N.

The system also comprises a data processing apparatus 58.

The data processing apparatus 58 is communicatively connected to the sensor unit 38 and to the notification interface 46. In more detail, the data processing apparatus 58 is communicatively connected to the two lidar units 40 arranged in the side mirrors 42 of the vehicle 10 and to the four speakers 48, to the four lamps 50 as well as to the four vibratable elements 52 integrated into the seat cushion 54 of the driver's seat 28 of the vehicle 10.

The data processing apparatus 58 comprises a data storage unit 60 and a data processing unit 62.

The data storage unit 60 comprises a computer-readable storage medium 64.

On the computer-readable storage medium 64, there is provided a computer program 66.

The computer program 66 and, thus, also the computer-readable storage medium 64, comprise instructions which, when executed by the data processing unit 62, or, more generally speaking, a computer, cause the computer or the data processing unit 62 to carry out a method for protecting a wheel 12, 14 of a vehicle 10 from being damaged by a roadway boundary 20.

Consequently, the data storage unit 60 and the data processing unit 62 form means 68 for carrying out the method for protecting a wheel 12, 14 of a vehicle 10 from being damaged by a roadway boundary 20.

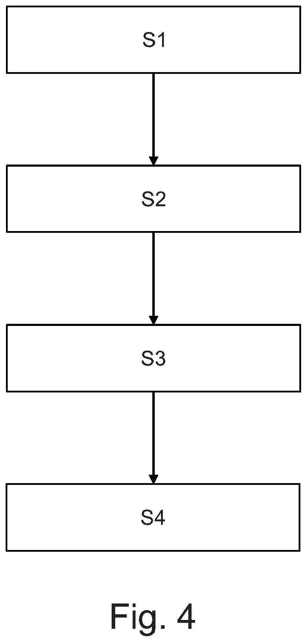

Figure 4 shows steps of the method for protecting a wheel 12, 14 of the vehicle 10 from being damaged by a roadway boundary 20.

In a step S1, the sensor unit 38, i.e. the lidar unit 40, provides first data D1 indicative of the roadway boundary 20 in the vicinity of the vehicle 10. In the present example of Figures 1 and 3, the lidar unit 40 provides first data indicative of the curbstone 22 in the vicinity of the right front wheel 12 of the vehicle 10.

Since the data processing apparatus 58 is communicatively connected to the lidar unit 40, the data processing apparatus 58 receives the first data D1.

In the present example, the first data D1 is lidar data, e.g. point cloud data.

In a step S2 of the method, the data processing apparatus 58 obtains second data D2 indicative of a likelihood of a collision between the curbstone 22 and the right front wheel 12 of the vehicle 10. The data processing apparatus 58 uses the first data D1 indicative of the roadway boundary 20 provided by the lidar unit 40 in order to determine the second data D2.

In particular, the likelihood of a collision between the curbstone 22 and the right front wheel 12 of the vehicle 10 may be derived based on a distance D between the curbstone 22 and the right front wheel 12 of the vehicle 10, from a traveling speed of the vehicle 10, from an approach speed of the right front wheel 12 of the vehicle 10 to the curbstone 22, from a traveling direction of the vehicle 10, from a steering angle of the right front wheel 12 of the vehicle 10 and/or from an expected trajectory of the right front wheel 10.

It is noted that the steering angle of the right front wheel 12 and/or the expected trajectory of the right front wheel 12 of the vehicle 10 may be obtained from a steering apparatus comprising the steering wheel 30 of the vehicle 10.

Additionally or alternatively, the steering angle of the right front wheel 12 and/or the expected trajectory of the right front wheel 12 may also be obtained from the first data D1 that is provided by the sensor unit 38. This may be possible because the right front wheel 12 is within the field of view 44, in other words within the field of perception 44, of the sensor unit 38 (see Figure 3).

In simplified words, a probabilistic prediction concerning a collision between the roadway boundary 20 and the wheel 12, 14 is done based on the first data D1.

In a step S3 of the method and with continued reference to the present example of Figures 1 and 3, a notification N for the user of the vehicle 10 is caused if a likelihood of a collision between the curbstone 22 and the right front wheel 12 exceeds a predefined first likelihood threshold. This means that the notification N is caused if the collision is found to be associated with a certain likelihood.

It is understood that the method is abandoned if the likelihood of a collision between the curbstone 22 and the right front wheel 12 does not exceed the predefined first likelihood threshold.

The notification N may not only warn the user of the vehicle 10 of the imminent collision. The notification N may convey additional information on the imminent collision to the user of the vehicle 10.

The additional information may comprise an indication which specific wheel 12, 14 of the vehicle 10 is at risk of colliding with the roadway boundary 20, in the present example, with the curbstone 22.

In the present example, the specific wheel 12, 14 at risk of collision is indicated to the user of the vehicle 10 by means of a spatial acoustic signal that is provided to the user by the speakers 48 arranged in the interior 26 of the passenger cabin of the vehicle 10. The spatial acoustic signal is provided to the user by only playing the notification N via the speaker 48 that is arranged in the front right corner of the interior 26 of the passenger cabin of the vehicle 10.

It is understood that alternatively, the spatial acoustic signal may be provided to the user via a plurality of the four speakers 48 arranged in the interior 26 of the passenger cabin of the vehicle 10. However, in this alternative and still with reference to the present example shown in Figures 1 and 3, the speaker 48 that is arranged in the front right corner of the interior 26 of the passenger cabin of the vehicle 10 will play the acoustic notification N significantly louder than the remaining speakers 48 arranged in the other corners of the interior 26 of the passenger cabin of the vehicle 10.

In any of the above alternatives, due to the spatial acoustic signal, the user of the vehicle 10 instantly becomes aware of which wheel 12, 14 of the vehicle 10 is at risk of colliding with the roadway boundary 20, in the present example with the curbstone 22.

The spatial acoustic signal comprises an onomatopoeic representation of a collision between the wheel 12, 14 and the roadway boundary 20. This means that the user of the vehicle 10 is provided with an acoustic notification N that sounds similar to the collision that is at risk of occurring.

In the present example, a recorded real-world sound of a tire 16 of a wheel 12, 14 rubbing on a lateral area of a curbstone 22 is used as an acoustic notification N. Such a sound is often referred to as a squeaking tire 16.

In the present example, the specific wheel 12, 14 that is at risk of colliding with the roadway boundary 20 is also indicated to the user of the vehicle 10 by means of the four lamps 50 arranged in the four corners of the interior 26 of the passenger cabin of the vehicle 10. This means that additionally, a visual indication is provided.

This is achieved in that the data processing apparatus 58 only causes the lamp 50 in the front right corner of the interior 26 of the passenger cabin of the vehicle 10 to light up.

Thus, the user of the vehicle 10 becomes aware of which wheel 12, 14 of the vehicle 10 is at risk of colliding with the roadway boundary 20, in the present example with the curbstone 22, from the position of the lit lamp 50 from a point of view of the user who is sitting in the interior 26 of the passenger cabin of the vehicle 10.

In the present example, the specific wheel 12, 14 at risk of collision is further indicated to the user of the vehicle 10 by means of the four vibratable elements 52 integrated into the four corners of the seat cushion 54 of the driver's seat 28 of the vehicle 10.

In case the user of the vehicle 10 is a driver of the vehicle 10, the user of the vehicle 10 will sit in the driver's seat 28 of the vehicle. Thus, the data processing apparatus 58 only causes the vibratable element 52 arranged in the front right corner of the seat cushion 54 of the driver's seat 28 to vibrate.

The user of the vehicle 10 may perceive the vibration of the vibratable element 52 in the front right corner of the seat cushion 54 through his or her legs. From this perception, the user of the vehicle 10 may become aware that it is the right front wheel 12, 14 of the vehicle 10 that is at risk of colliding with a roadway boundary 20, the present example with the curbstone 22.

A further additional information on the imminent collision that the notification N may convey to the user of the vehicle 10 is a distance D between the specific wheel 12, 14 of the vehicle 10 that is at risk of colliding with the roadway boundary 20 and the roadway boundary 20.

In the present example, the distance D between the right front wheel 12 of the vehicle 10 and the curbstone 22 is indicated to the user of the vehicle 10 via a repetition rate of the notification N.

This concept will be further explained in relation to Figure 2.

The x-axis 70 of the diagram in Figure 2 represents a time and the bars in the diagram represent individual pulses 72 of the notification N of the user.

As the vehicle 10 approaches the curbstone 22, individual pulses 72 of the notification N become more frequent. In other words, the individual pulses 72 are repeated at a higher rate as the distance D between the right front wheel 12 and the curbstone 22 decreases.

It is noted that the change in repetition rate of the notification N may apply to any of the acoustic notification N, the optical notification N and/or the haptic notification N.

In the present example, the distance D between the right front wheel 12 of the vehicle 10 and the curbstone 22 is also indicated to the user of the vehicle 10 via an intensity of the notification N.

This concept will also be further explained in relation to Figure 2.

The y-axis 74 of the diagram in Figure 2 represents an intensity level of individual pulses 72 of the notification N.

Since the x-axis of the diagram in Figure 2 still represents a time and the vehicle still approaches the curbstone 22, the intensity levels of the individual pulses 72 of the notification N are increased as the distance D between the right front wheel 12 and the curbstone 22 decreases.

Again, it is noted that the change in intensity of the notification N may apply to any of the acoustic notification N, the optical notification N and/or the haptic notification N.

A further additional information on the imminent collision that the notification N may convey to the user of the vehicle 10 is a difference between the likelihood of a collision between the roadway boundary 20 and the wheel 12, 14 and the predefined first likelihood threshold. In other words, a difference between the second data D2 indicative of the likelihood and the predefined first likelihood threshold may be indicated to the user as further additional information on the imminent collision.

Said difference may be indicated to the user in the same manner of a modified repetition rate and/or a modified intensity of the notification N as explained above with respect to the distance D between the roadway boundary 20 and the wheel 12, 14 of the vehicle 10. The only difference is that the repetition rate and/or the intensity of the notification N may be increased as the difference between the likelihood and the predefined first likelihood threshold increases.

From the above-described variants of the notifications N provided to the user of the vehicle, the user is expected to take measures to avoid a collision between the roadway boundary 20 and the wheel 12, 14 of the vehicle 10. However, there may be cases in which the user of vehicle 10 is inattentive and/or is incapable of introducing such measures.

For these cases, the method comprises a step S4 in which a collision mitigation maneuver is caused by the data processing apparatus 58. The collision mitigation maneuver may be caused if the likelihood of a collision between the roadway boundary 20 and the wheel 12, 14 of the vehicle 10 exceeds a predefined second likelihood threshold. It is understood that the predefined second likelihood threshold is of a higher value than the predefined first likelihood threshold.

Thus, the collision mitigation maneuver introduced by the data processing apparatus 58 serves as a last resort for avoiding a collision between the wheel 12, 14 of the vehicle 10 and the roadway boundary 20. Thus, it is ultimately made sure that the wheel 12, 14 of the vehicle 10 is protected from being damaged by the roadway boundary 20.

The collision mitigation maneuver may particularly comprise a braking action of the vehicle 10 and/or a steering action of the vehicle 10. To be able to cause these collision mitigation maneuvers, the data processing apparatus 58 may be communicatively connected to a brake actuator and/or to a steering actuator of the vehicle 10.

The braking action may cause the traveling speed of the vehicle 10 to be reduced such than impact energy of the wheel 12, 14 on the roadway boundary 20 is reduced.

The braking action may even cause the traveling speed of the vehicle 10 to be reduced to zero, i.e. such that the vehicle 10 comes to a standstill. This way, a collision between the wheel 12, 14 of the vehicle 10 and the roadway boundary 20 may completely be avoided.

The steering action may comprise a change in steering angle of the wheel 12, 14 of the vehicle 10 that is at risk of colliding with the roadway boundary 20 such that a trajectory of the respective wheel 12, 14 is modified in order that it does not collide with the roadway boundary 20.

The method for protecting the wheel 12, 14 of the vehicle 10 from being damaged by a roadway boundary 20 has been explained at the example of a right front wheel 12 being at risk of colliding with a curbstone 22. It is understood that the method equally applies to other wheels 12, 14 of the vehicle 10 being at risk of colliding with a curbstone 22 or other types of a roadway boundary 20, e.g. a crash barrier or a sharp edge of the drivable surface of the roadway 24 on which the vehicle 10 is traveling.

Moreover, it is to be noted that the acoustic signal has been specified as a sound of a squeaking tire 16. Further alternatives for the acoustic signal such as the sound of a tire 16 rolling on asphalt or scratching on a metal rim 18 of the wheel are also conceivable.

Furthermore, it has been explained above that the sound of the squeaking tire 16 was acquired by recording a real-world collision between a tire 16 and a curbstone 22. Further alternatives to the recording of a real-world sound may be the creation of a simulated sound imitating the real-world sound or the creation of a completely artificial sound that has no relation to and/or origin from any real-world sound.

In another alternative, the acoustic notification may also comprise an interruption of a pleasant noise. The pleasant noise may for example comprise the sound of a rolling tire. In another example, the pleasant noise that may be interrupted upon detection of a significant risk of collision may be a sequence of tones and/or an artistic melody.

It is further noted that even though in the examples explained in connection with the figures, a combination of an acoustic notification N, an optical notification N and a haptic notification N has been used, it is also possible to use just one or any two out of the acoustic notification N, the optical notification N and the haptic notification N.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front wheel
- 14: rear wheel
- 16: tire
- 18: rim
- 20: roadway boundary
- 22: curbstone
- 24: roadway
- 26: interior of passenger cabin
- 28: driver's seat
- 30: steering wheel
- 32: passenger seat
- 34: rear bench
- 36: system
- 38: sensor unit
- 40: lidar unit
- 42: side mirror
- 44: field of view/field of perception
- 46: notification interface
- 48: speaker
- 50: lamp
- 52: vibratable element
- 54: seat cushion
- 58: data processing apparatus
- 60: data storage unit
- 62: data processing unit
- 64: computer-readable storage medium
- 66: computer program
- 68: means for carrying out the method
- 70: x-axis
- 72: pulse of notification
- 74: y-axis

- D: distance
- D1: first data
- D2: second data
- N: notification

## Claims

1. A method for protecting a wheel (12, 14) of a vehicle (10) from being damaged by a roadway boundary (20), the method comprising:
- obtaining first data (D1) indicative of the roadway boundary (20) in the vicinity of the vehicle (10),
- obtaining second data (D2) indicative of a likelihood of a collision between the roadway boundary (20) and the wheel (12, 14) based on the first data (D1), and
- causing a notification (N) for a user of the vehicle (10) if the likelihood exceeds a predefined first likelihood threshold,
wherein the notification (N) is indicative of at least one of a specific wheel (12, 14) of the vehicle (10) risking collision with the roadway boundary (20), a distance (D) between the specific wheel (12, 14) of the vehicle (10) risking collision with the roadway boundary (20) and the roadway boundary (20), and a difference between the likelihood of a collision between the roadway boundary (20) and the wheel (12, 14) and the predefined first likelihood threshold.

2. The method of claim 1, wherein the notification (N) comprises at least one of an acoustic notification (N), an optical notification (N), and a haptic notification (N).

3. The method of claim 2, wherein the notification comprises the acoustic notification (N) and wherein the acoustic notification (N) comprises an onomatopoeic representation of a collision between the wheel (12, 14) and the roadway boundary (20).

4. The method of claim 3, wherein the onomatopoeic representation of the collision comprises at least one of a recorded real-world sound, a simulated sound recreating or imitating a real-world sound, and an artificial sound.

5. The method of claim 3 or 4, wherein the onomatopoeic representation comprises at least one of a noise of a rolling tire (16), a noise of a squeaking tire (16) and a noise of metal scratching.

6. The method of any one of claims 2 to 5, wherein the notification (N) comprises the acoustic notification (N) and wherein the acoustic notification (N) comprises a spatial audio signal having a virtual or effective origin associated with the specific wheel (12, 14) of the vehicle (10) risking collision with the roadway boundary (20).

7. The method of any one of claims 2 to 6, wherein the notification (N) comprises the acoustic notification (N) and wherein the distance (D) between the specific wheel (12, 14) of the vehicle (10) risking collision with the roadway boundary (20) and the roadway boundary (20) is indicated by an intensity and/or a repetition rate of at least one element of the acoustic notification (N).

8. The method of any one of claims 2 to 7, wherein the notification (N) comprises the acoustic notification (N) and wherein the difference between the likelihood of a collision between the roadway boundary (20) and the wheel (12, 14) and the predefined first likelihood threshold is indicated by an intensity and/or a repetition rate of the at least one element of the acoustic notification (N).

9. The method of any one of the preceding claims, further comprising causing a collision mitigation maneuver if the likelihood exceeds a predefined second likelihood threshold.

10. The method of any one of the preceding claims, wherein the first data (D1) comprises Lidar data.

11. A data processing apparatus (58) comprising means (68) for carrying out the method of any one of the preceding claims.

12. A computer program (66) comprising instructions which, when the computer program (66) is executed by a computer, cause the computer to carry out the method of claims 1 to 10.

13. A computer-readable storage medium (64) comprising instructions which, when executed by a computer, cause the computer to carry out the method of claims 1 to 10.

14. A system (36) for protecting a wheel (12, 14) of a vehicle (10) from being damaged by a roadway boundary (20), comprising
- a sensor unit (38) configured for providing first data (D1) indicative of the roadway boundary (20) in the vicinity of the vehicle (10),
- a data processing apparatus (58) according to claim 11, and
- a notification interface (46),
wherein the sensor unit (38) and the notification interface (46) are communicatively connected to the data processing apparatus (58).

15. The system (36) according to the preceding claim, wherein the sensor unit (38) comprises a lidar unit (40).
